# EUROPÄISCHE PATENTSCHRIFT

(11) **EP 0 792 329 B1**
(45) Veröffentlichungstag und Bekanntmachung des Hinweises auf die Patenterteilung: **01.03.2000**
(21) Anmeldenummer: 95940179.5
(22) Anmeldetag: 15.11.1995
(51) Int. Cl.: C09D 163/00, B32B 27/38, B32B 5/32

(54) **FLÄCHENGEBILDE AUS NACHWACHSENDEN ROHSTOFFEN**
FLAT STRUCTURE MADE OF RENEWABLE RAW MATERIALS
STRUCTURE PLATE EN MATIERES PREMIERES RENOUVELABLES

(30) Priorität: 15.11.1994 DE 4440860; 13.11.1995 DE 19542274
(43) Veröffentlichungstag der Anmeldung: 03.09.1997
(73) Patentinhaber: DLW Aktiengesellschaft, D-74321 Bietigheim-Bissingen (DE)
(72) Erfinder: EDINGER, Sabine, D-74348 Lauffen (DE); SCHULZ, Ditmar, D-74189 Weinsberg (DE); BAUMGARTNER, Susanne, D-71640 Ludwigsburg (DE); KASTL, Bernd, D-74321 Bietigheim-Bissingen (DE); MAURER, Frank, D-71640 Ludwigsburg (DE)
(74) Vertreter: Perrey, Ralf, Dr. Dipl.-Chem.
(86) Internationale Anmeldenummer: EP9504496
(87) Internationale Veröffentlichungsnummer: WO9615203

(56) Entgegenhaltungen:
- EP-A- 0 539 916
- DE-A- 1 494 405
- DE-A- 3 903 669
- US-A- 3 819 438
- US-A- 5 082 708

## Beschreibung

Die Erfindung betrifft den in den Patentansprüchen angegebenen Gegenstand.

Die Erfindung betrifft insbesondere ein mehrschichtiges Flächengebilde aus nachwachsenden Rohstoffen, wie z.B. Bodenbeläge oder Fliesen. Das erfindungsgemäße Flächengebilde besteht aus einer Trägerschicht (I) und mindestens einem transparenten Deckstrich, z.B. der Nutzschicht. Weiterhin können ein Rückenstrich, gegebenenfalls ein Kompaktstrich oder Grundstrich, der zwischen der Trägerschicht und dem Deckstrich und/oder zwischen Trägerschicht und Rückenstrich angeordnet ist, im erfindungsgemäßen Flächengebilde vorgesehen sein. Gegebenenfalls kann auch eine chemisch geschäumte Schicht unter dem Deckstrich angeordnet sein. Diese chemische Schaumschicht kann chemisch geprägt werden.

Die Erfindung betrifft daher insbesondere weichmacherfreie Bodenbeläge auf der Basis nachwachsender Rohstoffe, gegebenenfalls mit chemisch oder mechanisch geschäumten Schaumschichten, wobei diese auch chemisch geprägt sein können.

PVC-Kunststoffbeläge finden heute in großem Umfang aufgrund ihrer vielfältigen dekorativen Möglichkeiten, weitgehender Beständigkeit gegenüber Abnutzung, leichten Pflegbarkeit und Preiswürdigkeit Verwendung.

CV-Bodenbeläge (Cushion Vinyls) werden aus PVC-Plastisolen im Streichverfahren auf einer Trägerschicht oder einer Releasepapierunterlage und anschließendem Gelieren hergestellt. Die Plastisole bestehen aus PVC-Teilchen, Weichmachern, Stabilisatoren und üblichen Hilfs- und Füllstoffen, die im Gelierofen zu einer Matrix zusammensintern.

Durch Zufügen von chemischen Treibmitteln kann eine Schicht zusätzlich noch thermisch verschäumt werden, wobei durch Aufbringen von Inhibierungsmitteln auf bestimmte Bereiche noch eine zusätzliche Strukturierung erreicht werden kann.

Selbstverständlich können in diesen Belägen auch mechanische Schäume verwendet werden wie sie allgemein bekannt sind und später noch in Beispielen gezeigt werden.

Es ist auch möglich, durch Aufbringen mehrerer Schichten unterschiedlicher Zusammensetzung die Eigenschaften in sehr weitem Maße zu variieren.

Obwohl PVC von seiner Wirtschaftlichkeit und seinen Eigenschaften her an sich ein idealer Werkstoff ist, verlangen jedoch die immer stärker zu berücksichtigenden ökologischen Aspekte - Vermeidung von flüchtigen Weichmachern und Lösemitteln (VOC) und halogenhaltigen Produkten sowie Recyclefähigkeit - Bodenbeläge zu suchen, welche PVC- und weichmacherfrei sind.

Aus technischen und wirtschaftlichen Gründen ist es jedoch sinnvoll, die vorhandenen Produktionseinrichtungen beizubehalten.

Weiterhin sollte der Bodenbelag auch dessinierbar sein und aus unterschiedlichen Schichten bestehen, von denen eine oder mehrere geschäumt sind.

Die oben beschriebenen Forderungen werden bis jetzt von keinem bekannten System erfüllt.

Nach dem sogenannten Furukawa Verfahren ist es bekannt, vernetzte PE-Schäume herzustellen, indem man Polyethylen, Azodicarbonamid und Dicumolperoxid mit Hilfe eines Extruders und Breitschlitzdüse zu einem Film oder einer Platte extrudiert, wobei die Extrusion bei einer Temperatur erfolgen muß, bei der das PE flüssig ist, das Vernetzungsmittel und das Schäummittel aber noch nicht zersetzt ist.

Erst in einem nachgeschalteten Schäumofen wird das Polyethylen geschäumt und gleichzeitig vernetzt.

Eine wirtschaftliche Herstellung von Bodenbelägen ist nach diesem Verfahren jedoch nicht gegeben.

Bekannt ist außerdem, daß man Mischungen aus EVA mit PE oder reines EVA mit Füllstoffen, Aktivatoren, Treibmitteln und gegebenenfalls Vernetzungsmitteln unter 100°C mischen kann. Nach dem Granulieren dieser Mischmassen und Einfüllen in Formen lassen sich auch kompliziert geformte, thermisch geschäumte Teile durch Erhitzen auf die Zerfallstemperatur des Treibmittels daraus erhalten.

Leider ist diese Anwendung nur für kleinere Teile anwendbar.

Weiterhin ist bekannt, weichmacherfreie Polyurethanschäume durch mechanisches Verschäumen der Komponenten unter Einpressung von Luft zu erzeugen, jedoch kann das Verschäumen dabei nicht inhibiert und dadurch eine Struktur erzeugt werden.

In der DE 3903669 A1 ist ferner beschrieben, wie ein Bodenbelag aus Polymethylmethacrylat, Weichmachern und den üblichen Füll- und Hilfsstoffen, ähnlich einem PVC-CV-Bodenbelag hergestellt werden kann. Nachteilig bei diesem Verfahren ist aber u. a. der relativ hohe Weichmacheranteil im Bodenbelag.

Ein schon seit langer Zeit bekannter Bodenbelag, ebenfalls auf der Basis nachwachsender Rohstoffe, ist Linoleum. Das zum Teil komplizierte und langwierige Verfahren zur Herstellung von Linoleum ist ausführlich in Ullmanns Enzyklopädie Band 12 (1976), Seite 24 ff. und Encycl. of Pol.Sci. and Tech. Vol. 1, 1964, Seite 403 ff. beschrieben.

Wegen des langwierigen Herstellverfahrens ist schon mehrfach versucht worden, den Herstell- und Reifungsprozeß von Linoleum zu beschleunigen.

In der EP 0174042 und EP 0228116 werden 2-Komponentensysteme beschrieben, welche zur Verarbeitung auf üblichen Anlagen zur Linoleumherstellung geeignet sind, nicht jedoch für das Streichverfahren.

Aus technischen Gründen kommen auch die in der DE 2241535 A1 beschriebenen Massen für die gewünschte und geforderte Anwendung nicht in Frage. Als Vernetzer dienen hier Verbindungen mit normalen aliphatischen Carbonsäuregruppen, wie z.B. die Zitronensäureteilester. Diese können die Forderung nicht erfüllen, daß sie nach den genannten kurzen Aufheizzeiten auf kontinuierlich arbeitenden Beschichtungsanlagen schon klebfrei sind. Weiterhin sind Zitronensäureester, also Monoalkylester der Zitronensäure oder Polyzitronensäure mit höheren Alkoholen der Kettenlänge C₈ bis C₂₂ aufgrund des Herstellungsverfahrens sehr teuere Substanzen.

Die DE 4135664 A1 beschreibt Beschichtungsmassen, die auf nachwachsenden Rohstoffen basieren und zum Beschichten von textilen Flächengebilden oder von Releasepapier dienen. Die Beschichtungsmassen bestehen aus einer Kombination von
a) Epoxidierungsprodukten von Estern ungesättigter Fettsäuren der Kettenlänge C₈ bis C₂₂ mit 2 bis 6 C-Atomen enthaltenden mehrwertigen aliphatischen Alkoholen, die im Durchschnitt mehr als eine Epoxidgruppe pro Molekül enthalten, und
b) Teilestern von Polycarbonsäuren mit Polyetherpolyolen, welche mindestens zwei freie Carbonsäuregruppen pro Molekül und in α,β-Stellung zu den freien Carbonsäuregruppen eine Doppelbindung enthalten, und
c) einem Hydrophobierungsmittel.
In den Beispielen der DE 4135664 A1 wird als Komponente a) epoxidiertes Leinöl (18,1 g) und als Komponente b) ein Halbester aus Maleinsäureanhydrid und Dipropylenglykol (16 g), im Molverhältnis von 0,8:1 bis 1:1,2, eingesetzt. Die DE 41 35 664 A1 beschreibt als Beispiel einen Bodenbelag mit einer ersten Schicht, die neben epoxidiertem Leinöl und Halbester aus Maleinsäureanhydrid und Dipropylenglykol und, auf die Menge dieser beiden bezogen, 20 % Kaolin und 9 % Stearat enthält, einer zweiten Schicht aus dem gleichen epoxidierten Leinöl und einem Halbester von Maleinsäure mit Polypropylenglykol, die, auf die Menge dieser beiden Komponenten bezogen, 23 % Kaolin und 8 % Stearat enthält und in die ein Glasfaservlies einkaschiert und eingewalzt ist und einem Deckstrich, wobei der Belag bei 150°C bis 180°C verfestigt wird. Nachteilig ist jedoch, daß die oberste Schicht dieses Belages sehr rauh und nicht transparent ist. Weiterhin sind in den beschriebenen Rezepturen keine Schäummittel enthalten; sie sind also weder chemisch noch mechanisch schäumbar. Die beschriebenen Rückenbeschichtungen (Beispiel 2) erfordern eine umständliche Herstellung mit teuerem Trennpapier; sie weisen keinen Schaum auf und sind damit ohne Trittkomfort. Weiterhin zeigt sich, daß die Oberfläche der beschriebenen Beläge nicht genügend schmutzabweisend sind und eine schlechte Durchhärtung aufweisen.

Es ist daher Aufgabe der Erfindung, ein verbessertes Flächengebilde aus nachwachsenden Rohstoffen anzugeben, das die obigen Nachteile vermeidet und außerdem gegebenenfalls eine Schicht aufweist, die dessinierbar ist. Weiterhin soll ein mehrschichtiger Belag aus Beschichtungsmassen gebildet werden, von denen wenigstens die Masse für eine Schicht chemisch oder mechanisch schäumbar ist und auch der Gesamtaufbau einfach herstellbar ist.

Diese Aufgabe wird durch das Flächengebilde nach Patentanspruch 1 gelöst.

In den Unteransprüchen sind vorteilhafte Ausführungsformen der Erfindung enthalten.

Die Erfindung betrifft daher ein Flächengebilde aus mindestens einer Trägerschicht (I) und mindestens einem transparenten Deckstrich (II), gegebenenfalls einem unter der Trägerschicht (I) angeordneten Rückenstrich (III) aus einer chemisch oder mechanisch geschäumten Schaumschicht, gegebenenfalls einem Kompakt- oder Grundstrich (IV), der zwischen Trägerschicht (I) und Deckstrich (II) und/oder zwischen Trägerschicht (I) und Rückenstrich (III) angeordnet ist, wobei die Beschichtungsmassen für die Schichten (II), (III), (IV) aus einer Kombination von
(a) Epoxidierungsprodukten von Estern ungesättigter Fettsäuren der Kettenlänge C₈ bis C₂₂ mit 2 bis 6 C-Atomen enthaltenden mehrwertigen aliphatischen Alkoholen, die im Durchschnitt mehr als eine Epoxidgruppe pro Molekül enthalten, und
(b) Teilestern von Polycarbonsäuren mit Polyetherpolyolen, welche mindestens eine freie Carbonsäuregruppe pro Molekül und eine Doppelbindung enthalten,
(c) gegebenenfalls einem Hydrophobierungsmittel, und
(d) gegebenenfalls weiteren Zusatzstoffen aus der Gruppe, die aus Füllstoffen, Pigmenten, Treibmitteln, Hilfsstoffen besteht,
   herstellbar sind, wobei für den Deckstrich (II) die Komponenten (a) und (b) im Gewichtsverhältnis von 0,33 : 1 bis 1,45 : 1,
   für den Grundstrich (IV) die Komponenten (a) und (b) im Gewichtsverhältnis von 0,92 : 1 bis 3,15 : 1, und
   für den Rückenstrich (III) die Komponenten (a) und (b) im Gewichtsverhältnis von 0,75 : 1 bis 2,375 : 1 verwendet werden, und wobei in der Beschichtungsmasse für den Deckstrich (II) Sikkative in einer Menge von 2 x 10⁻¹ bis 10⁻² % Metallgehalt, bezogen auf epoxidiertes Öl und Halbester, vorhanden sind.

Erfindungsgemäß wird daher ein CV-ähnlicher Bodenbelag erzeugt, ohne dabei PVC oder Weichmacher zu verwenden. Es wurde dabei festgestellt, daß überraschenderweise die mechanischen Werte als auch die schmutzabweisenden Eigenschaften des erfindungsgemäßen Flächengebildes, d.h. des Bodenbelags oder der Fliesen, durch die Verwendung von Sikkativen noch einmal gesteigert werden konnten.

Bei den Sikkativen wurde festgestellt, daß überraschenderweise eine Kombination von Cer und Kobalt oder andererseits eine Kombination von Kobalt, Lithium und Calcium oder eine Kombination von Mangan, Lithium und Calcium besonders gute Effekte zeigten, d.h. der Härtevorgang der Mischungen wurde beschleunigt, und sehr gute schmutzabweisende Eigenschaften des erfindungsgemäßen Belags wurden erreicht.

Die erfindungsgemäßen Flächengebilde, d.h. die Bodenbeläge oder die Fliesen werden derart hergestellt, daß man in an sich bekannter Weise eine Kombination der obengenannten Komponenten (a) und (b) im Gewichtsverhältnis von 0,33 : 1 bis 1,45 : 1 für den Deckstrich (II),
für den Grundstrich (IV) die Komponenten (a) und (b) im Gewichtsverhältnis von 0,92 : 1 bis 3,15 : 1,
und für den Rückenstrich (III) die Komponenten (a) und (b) im Gewichtsverhältnis von 0,75 : 1 bis 2,375 : 1 verwendet,
sowie insbesondere von 0,6 : 1 bis 1,2 : 1, Füllstoffe, und bei der Masse für den Deckstrich, ggf. mindestens 15 Gew.% Hydrophobierungsmittel und bei der Masse für einen chemischen Schaum ein Treibmittel und gegebenenfalls für jede Schaummasse einen Schaumstabilisator vermischt und zu einer Paste verarbeitet und diese Pasten dann in an sich bekannter Weise zu mehrschichtigen Bodenbelägen verarbeitet.

Die Streichpasten für das erfindungsgemäße Flächengebilde enthalten - bis auf den Deckstrich (bis maximal 2% Kieselsäure) - alle größere Füllstoffmengen, nämlich Mengen von 30 Gew.% bis 75 Gew.%, bezogen auf die Mischung aus Öl und Halbester, insbesondere 40 bis 60 Gew.% Füllstoff, wobei im Kompaktstrich 13 bis 74 Gew.-%, vorzugsweise 20 bis 45 Gew.%, insbesondere 40 Gew.%, und im chemischen Schaum 39 bis 100 Gew.%, vorzugsweise 60 bis 100 Gew.-%, vorzugsweise 64 Gew.% Füllstoff eingesetzt werden, während in den Massen für den mechanischen Schaum meist nur wenig, vorzugsweise nicht mehr als 10 Gew.%, z.B. 1 bis 10 Gew.%, noch bevorzugter nicht mehr als 5 Gew.% Füllstoff enthalten sind. Alle %-Angaben sind immer auf die Gesamtmenge an epoxidiertem Öl und Halbester bezogen, wenn nichts anderes angegeben ist.

Der Deckstrich ist transparent, da man nämlich dann die darunterliegende Schicht bedrucken kann und ein bedrucktes Flächengebilde erhält, das hohe mechanische Festigkeit und sehr gute schmutzabweisende Eigenschaften hat. Als Beispiel für eine solche Anwendung sei auf einen Mehrschichtbelag mit Parkettmuster, aber auch auf Wachstuche und Kunstleder oder Schutzschichten für Glas verwiesen.

Die Beläge enthalten somit verhältnismäßig hohe Anteile an Zusatzstoffen, insbesondere mineralischen Füllstoffen aus der Gruppe Kreide, Bariumsulfat, Kieselsäure, Kaolin und Talkum, jedoch ggf. auch an Holzmehl, Korkmehl, Glasmehl, Textilfasern oder Pflanzenfasern, die auch im Gemisch vorliegen können, wobei die Füllstoffmenge im gesamten Bodenbelag bis zu 70 Gew.-%, bei schaumfreien Belägen vorzugsweise 30 bis 60 Gew.-% und bei Bodenbelägen mit chemisch geschäumten Schichten vorzugsweise 40 bis 60 Gew.-% des gesamten Bodenbelages betragen kann.
Bei Massen für chemisch geschäumte Schichten liegt die Menge an Treibmittelstoffen im üblichen Bereich bis zu ca. 25 Gew.-%, insbesondere bis zu ca. 15 Gew. %, wobei sonstige übliche Hilfsstoffe ca. bis zu 15 Gew.-% betragen können.
Vorzugsweise bestehen die Bodenbeläge aus drei, vier oder fünf Lagen, nämlich einem Kompakt-, evtl. einem chemischen Schaum- und einem transparenten Deckstrich und einem Träger- und gegebenenfalls einem chemisch geschäumten Rückenstrich, wobei der chemische Schaum natürlich auch durch einen mechanischen Schaum ersetzt sein kann oder beide Sorten von Schaum vorliegen können. Falls zwischen dem Kompaktstrich und dem Deckstrich eine chemisch geschäumte Schicht angeordnet wird, kann diese in einer besonderen Ausführungsform der Erfindung chemisch geprägt werden. Dazu trägt man auf dem Kompaktstrich eine Paste auf. Diese Paste enthält ein Treibmittel und einen Kicker; darunter versteht man Polyole, Harnstoff, Zink-, Blei- oder Kadmiumverbindungen, wobei ZnO bevorzugt ist, welche die Zersetzungstemperatur des Treibmittels erniedrigen. Der Pastenstrich wird nun unterhalb der Zersetzungstemperatur des Treibmittels vernetzt. In der nächsten Fabrikationsstufe wird die bestrichene Paste mit dem Tiefdruckmuster versehen. Den Druckfarben, die im fertigen Belag tief sein sollen, wird ein Inhibitor zugesetzt. Der Inhibitor schwächt die Wirkung des Kickers oder hebt sie ganz auf, so daß die Zersetzung des Treibmittels nach höheren Temperaturen verschoben wird. Geeignete Substanzen mit Inhibitorwirkung sind z.B. Benzotriazolderivate, Trimellithsäureanhydrid und dergleichen. Durch Variation der Menge des zugesetzten Inhibitors lassen sich verschiedene Relieftiefen erreichen. Über dieser chemisch geschäumten Schicht mit aufgebrachtem Reliefmuster kann dann eine Schutzschicht aus Polymeren bzw. Copolymerisaten oder Wachsen angeordnet werden. Dies ist deshalb von Vorteil, da der Mehrschichtbelag alkaliempfindlich ist und daher eine Schutzschicht aus (Co)Polymeren, d.h. aus ungesättigen härtbaren Lacksystemen sehr vorteilhaft ist. Beispiele für diese ungesättigten härtbaren Lacksysteme sind Polyacrylate, Polymethacrylate, Polyurethane und Mischungen derselben. Es kann aber auch z.B. Carnaubawachs eingesetzt werden. Die Schutzschicht sollte aus mit dem Deckstrich verträglichen (Co)Polymeren hergestellt sein.

Die Herstellung der erfindungsgemäßen Bodenbeläge kann, wie oben schon beschrieben ist, analog zur Herstellung entsprechender PVC-Beläge erfolgen.

Es handelt sich insbesondere um ein kontinuierliches Verfahren, welches ähnlich der CV-Herstellung nacheinander mit unterschiedlichen Pasten einen Gesamtaufbau eines Bodenbelages beschreibt. Ein solches Verfahren kann auch, wie schon erwähnt, die Schäumung, insbesondere die chemische Schäumung umfassen und führt zu einem Belag mit Bedruckbarkeit.

Die Komponente a) ist ein Epoxidierungsprodukt eines natürlichen ungesättigten Fettes oder Öles und die Komponente b) besteht aus Teilestern von Polycarbonsäuren, z.B. solchen mit Doppelbindungen, mit Polyethylenglykolen, wobei die Kettenlänge des Polyethylenglykols 2 bis 10 Ethylenoxid-Einheiten aufweist und dabei Teilester noch mindestens eine freie Carbonsäuregruppen enthalten. In einer anderen Ausführungsform der Erfindung können als Komponente b) auch Teilester von Polycarbonsäuren mit Polyetherpolyolen eingesetzt werden, welche mindestens zwei freie Carbonsäuregruppen pro Molekül und in α,β-Stellung zu den freien Carbonsäuregruppen eine Doppelbindung enthalten.

Weitere bevorzugte Komponenten b) sind nämlich Teilester von Polycarbonsäuren mit Polytetramethylenglykolethern oder von Polycarbonsäuren mit Polyisobutylenglykolen ebenfalls von der Kettenlänge 2 bis 10.

Als Polycarbonsäure bei der Komponente b) kommen insbesondere Maleinsäure oder Maleinsäureanhydrid, oder Itaconsäure in Frage.

Die Herstellung des Belages erfolgt zum Beispiel, indem die Komponenten zu einer Paste vermischt, mittels Beschichtungsvorrichtungen auf eine Bahn in entsprechende Dicke aufgetragen, gegebenenfalls aufgeschäumt und in bekannter Art verfestigt werden. Es können auch schaummittelhaltige und schaummittelfreie Schichten zu einer Bahn verbunden und gleichzeitig oder in aufeinanderfolgenden Schritten aufgeschäumt und verfestigt werden.

Ein besonders bevorzugtes Material der Komponente b) ist ein Teilester der Fa. Th. Böhme KG, Geretsried, der dort unter der Bezeichnung Ateval® VNR 1 erhältlich ist und ein 2-Butendicarbonsäure-oxybis(methyl-2,1-ethandiyl)ester ist.

Als Hilfsstoffe im Sinne der vorliegenden Erfindung sind Acrylate, wie z.B. Polymethylmethacrylat, zu verstehen, die in die Nutzschicht eingearbeitet werden, um die Haftung zwischen dem aufgebrachten UV-Lack und der Nutzschicht, d.h. dem Deckstrich zu verbessern. Weiterhin kann als Hilfsstoff Leinöl im Deckstrich in Mengen von 1 bis zu 16 Gew. %, vorzugsweise 1 bis 10 Gew.% enthalten sein.

Als Treibmittel im erfindungsgemäßen Sinne werden im Rückenstrich 1 bis 5% Azodicarbonsäureamid oder Sulfohydrazide verwendet, wobei insbesondere 3 Gew.% Treibmittel bevorzugt sind. Wie bereits oben erwähnt ist, können auch Kicker bei dem chemischen Prägeverfahren eingesetzt werden, um die Zersetzungstemperatur des Treibmittels zu erniedrigen. Erfindungsgemäß wird hier insbesondere Zinkoxid eingesetzt.

Die folgenden Beispiele erläutern die Erfindung. Sie zeigen die verschiedenen Pasten und zwar in bevorzugtem Bereich der Bestandteile wie jeweils im Ausführungsbeispiel:

| Beispiel 1 | Kompaktstrich | |
|---|---|---|
| | Ateval® VNR 1 | 40 bis 60 kg, |
| | | insbesondere 50 kg |
| | | |
| | Epoxidiertes Sojaöl | 35 bis 80 kg, |
| | | insbesondere 40 kg |
| | Epoxidiertes Leinöl | 20 bis 46 kg, |
| | | insbesondere 25 kg |
| | | |
| | Calciumcarbonat | 20 bis 50 kg, |
| | | insbesondere 40 kg |
| | | |
| | Titandioxid | 5 bis 20 kg, |
| | | insbesondere 5 kg |

| Beispiel 2 | Chemischer Schaum | |
|---|---|---|
| | Ateval® VNR 1 | 40 bis 60 kg, |
| | | insbesondere 50 kg |
| | | |
| | Epoxidiertes Sojaöl | 20 bis 35 kg, |
| | | insbesondere 25 kg |
| | | |
| | Epoxidiertes Leinöl | 40 bis 60 kg, |
| | | insbesondere 50 kg |
| | | |
| | Treibmittelgemisch | 2 bis 25 kg, |
| | | insbesondere 12 kg |
| | | |
| | Calciumcarbonat | 60 bis 100 kg, |
| | | insbesondere 80 kg |

| Beispiel 3 | transparenter Deckstrich | |
|---|---|---|
| | Ateval® VNR 1 | 40 bis 60 kg, |
| | | insbesondere 50 kg |
| | | |
| | Epoxidiertes Leinöl | 20 bis 58 kg, |
| | | insbesondere 27 kg |
| | | |
| | Leinöl | 2 bis 10 kg, |
| | | insbesondere 3 kg |
| | | |
| | Kieselsäure | 2 bis 5 kg |
| | | insbesondere 2 kg |
| | | |
| | Polymethylmethacrylat | 1 bis 5 kg, |
| | | insbesondere 2 kg |
| | | |
| | Sikkative | 2x10⁻¹ bis 10⁻²% Metallgehalt, |
| | | insbesondere 10⁻¹% |
| | gegebenenfalls: Hoechst Wachs E (Montanwachs, also Ester der Montansäure) | 12 bis 34 kg |
| | | insbesondere 22 kg |

| Beispiel 4 | mechanischer Schaum | |
|---|---|---|
| | Ateval® VNR 1 | 40 bis 60 kg, |
| | | insbesondere 50 kg |
| | | |
| | Epoxidiertes Sojaöl | 30 bis 43 kg, |
| | | insbesondere 35 kg |
| | | |
| | Epoxidiertes Leinöl | 15 bis 27 kg, |
| | | insbesondere 20 kg |
| | | |
| | Schaumstabilisator | 1,5 bis 3 kg, |
| | | insbesondere 2 kg |
| | | |
| | Titandioxid | 1 bis 5 kg, |
| | | insbesondere 2 kg |

Bei der Herstellung von Bodenbelagsbahnen liegen Reaktionszeiten bei dieser Paste (Reaktions- und Ausschäumzeiten) bei 2 - 12 Minuten. Die erforderlichen Temperaturen liegen zwischen 140 bis 200°C, vorzugsweise 170 bis 190°C. Die wieder abgekühlten Bahnen erweisen sich anschließend als trocken und nicht mehr klebend, so daß sie unmittelbar der Konfektionierung und Verpackung zugeführt werden können.

Beispiel einer erfindungsgemäßen Zusammensetzung:
- Träger 60 g/m²
- Grundstrich 400 g/m²
- chem. Schaumstrich 550 g/m²
- Deckstrich 400 g/m²
- Rückenstrich 1200 g/m²

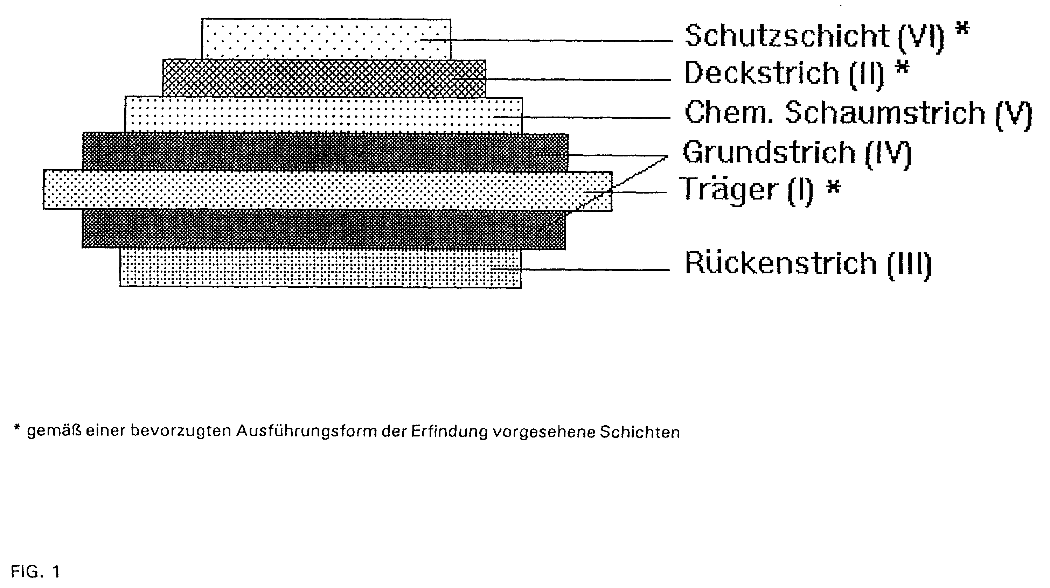

In Figur 1 wird beispielhaft ein erfindungsgemäßes mehrschichtiges Flächengebilde gezeigt. Dabei sind insbesondere die zwingend vorgeschriebenen Schichten mit einem "*" gekennzeichnet.

Die obigen Werte gelten für gewöhnliche Bodenbeläge mit Abweichungen von ± 25%. Normalerweise soll der Bodenbelag 1,1 bis 3 mm Dicke haben, insbesondere etwa 2 mm.
Wenn jedoch eine besonders gute Trittschalldämmung gewünscht ist, soll die Schaumschicht besonders dick sein. Für einen Verbundbelag mit Schaumstrich kann eine Dicke des Schaumstriches von 0,3 mm, was nach dem Vernetzen und Schäumen ca. 0,9 mm Schaumschicht ergibt, angegeben werden. Diese Schicht kann erfindungsgemäß ohne weiteres erhöht und die Dicken der anderen Schichten entsprechend erniedrigt werden, um z.B. eine Gesamtdicke von 2 mm einzuhalten.

Für die Dessinierung bzw. Strukturierung der Oberfläche kann ein mechanisches Prägen, chemisches Prägen oder Siebdruck (Rotoscreen-Verfahren) vorgesehen sein.

Erfindungsgemäß wird der Deckstrich füllstofffrei oder praktisch füllstofffrei ausgebildet, so daß er transparent ist und somit die darunterliegende Schicht vor Aufbringen des Deckstriches bedruckt werden kann und die transparente Deckschicht dann in den üblichen Herstellungsanlagen für Bodenbeläge aufgebracht.

## Patentansprüche

1. Flächengebilde aus mindestens einer üblichen Trägerschicht (I) und mindestens einem transparenten Deckstrich (II), gegebenenfalls einem unter der Trägerschicht (I) angeordneten Rückenstrich (III) aus einer chemisch oder mechanisch geschäumten Schaumschicht, gegebenenfalls einem Grundstrich (IV), der zwischen Trägerschicht (I) und Deckstrich (II) und/oder zwischen Trägerschicht (I) und Rückenstrich (III) angeordnet ist, wobei die Beschichtungsmassen für die Schichten (II), (III), (IV) aus einer Kombination von
(a) Epoxidierungsprodukten von Estern ungesättigter Fettsäuren der Kettenlänge C₈ bis C₂₂ mit 2 bis 6 C-Atomen enthaltenden mehrwertigen aliphatischen Alkoholen, die im Durchschnitt mehr als eine Epoxidgruppe pro Molekül enthalten, und
(b) Teilestern von Polycarbonsäuren mit Polyetherpolyolen, welche mindestens eine freie Carbonsäuregruppe pro Molekül und eine Doppelbindung enthalten,
(c) gegebenenfalls einem Hydrophobierungsmittel, und
(d) gegebenenfalls weiteren Zusatzstoffen aus der Gruppe, die aus Füllstoffen, Pigmenten, Treibmitteln, Hilfsstoffen besteht,
herstellbar sind, wobei für den Deckstrich (II) die Komponenten (a) und (b) im Gewichtsverhältnis von 0,33 : 1 bis 1,45 : 1,
für den Grundstrich (IV) die Komponenten (a) und (b) im Gewichtsverhältnis von 0,92 : 1 bis 3,15 : 1, und
für den Rückenstrich (III) die Komponenten (a) und (b) im Gewichtsverhältnis von 0,75 : 1 bis 2,375 : 1 verwendet werden, und wobei in der Beschichtungsmasse für den Deckstrich (II) Sikkative in einer Menge von 2 x 10⁻¹ bis 10⁻² % Metallgehalt, bezogen auf epoxidiertes Öl und Halbester, vorhanden sind.

2. Flächengebilde nach Anspruch 1, dadurch gekennzeichnet, daß unter dem Deckstrich (II) eine chemische geschäumte Schicht (V) angeordnet ist.

3. Flächengebilde nach den Ansprüchen 1 und 2, dadurch gekennzeichnet, daß über dem Deckstrich (II) eine Schutzschicht (VI) aus ungesätttigten härtbaren Lacksystemen angeordnet ist, wobei die Polymere oder Copolymere für die Lacksysteme ausgewählt sind aus der Gruppe aus Polyacrylaten, Polymethacrylaten, Polyurethanen und Mischungen davon.

4. Flächengebilde nach Anspruch 1, dadurch gekennzeichnet, daß die Polycarbonsäure der Komponente (b) 2 bis 10 Kohlenstoffatome aufweist.

5. Flächengebilde nach Anspruch 4, dadurch gekennzeichnet, daß die Polycarbonsäure eine Dicarbonsäure ist.

6. Flächengebilde nach einem der vorhergehenden Ansprüche 1 bis 5, dadurch gekennzeichnet, daß die Dicarbonsäure ausgewählt ist aus der Gruppe, die aus Itaconsäure, Maleinsäure, Fumarsäure, deren Anhydride oder deren Gemischen besteht.

7. Flächengebilde nach einem der vorhergehenden Ansprüche 1 bis 6, dadurch gekennzeichnet, daß in der Masse für den Deckstrich (II) 10 bis 57 Gew.% Hydrophobierungsmittel, bezogen auf die Mischung an epoxidiertem Öl und Halbester, enthalten sind.

8. Flächengebilde nach Anspruch 7, dadurch gekennzeichnet, daß in der Masse für den Deckstrich (II) 12 bis 34 Gew. % Hydrophobierungsmittel, bezogen auf die Mischung an epoxidiertem Öl und Halbester, enthalten sind.

9. Flächengebilde nach einem der vorhergehenden Ansprüche 1 bis 8, dadurch gekennzeichnet, daß in den Beschichtungsmassen für den Deckstrich (II) nicht mehr als 8 Gew.% Füllstoff enthalten sind.

10. Flächengebilde nach einem der vorhergehenden Ansprüche 1 bis 8, dadurch gekennzeichnet, daß in den Beschichtungsmassen für den Deckstrich (II) nicht mehr als 2 Gew. % Füllstoff enthalten sind.

11. Flächengebilde nach einem der vorhergehenden Ansprüche 1 bis 6, dadurch gekennzeichnet, daß in der Beschichtungsmasse für den Kompakt- oder Grundstrich (IV) 13 bis 74 Gew. % Füllstoff, bezogen auf epoxidiertes Öl und Halbester, enthalten sind.

12. Flächengebilde nach Anspruch 11, dadurch gekennzeichnet, daß in der Beschichtungsmasse für den Kompakt- oder Grundstrich (IV) 20 bis 50 Gew. % Füllstoff, bezogen auf epoxidiertes Öl und Halbester, enthalten sind.

13. Flächengebilde nach einem der vorhergehenden Ansprüche 1 bis 6, dadurch gekennzeichnet, daß in der Beschichtungsmasse für die chemisch geschäumte Schaumschicht (V) 39 bis 100 Gew.% Füllstoff, bezogen auf epoxidiertes Öl und Halbester, enthalten sind.

14. Flächengebilde nach Anspruch 13, dadurch gekennzeichnet, daß in der Beschichtungsmasse für die chemisch geschäumte Schaumschicht (V) 60 bis 100 Gew. % Füllstoff enthalten sind.

15. Flächengebilde nach einem der vorhergehenden Ansprüche 1 bis 6, dadurch gekennzeichnet, daß in der Beschichtungsmasse für die mechanisch geschäumte Schaumschicht bis zu 10 Gew. % Füllstoff, bezogen auf das epoxidierte Öl und Halbester, vorhanden sind.

16. Flächengebilde nach irgendeinem der vorhergehenden Ansprüche 1 bis 15, dadurch gekennzeichnet, daß in den Beschichtungsmassen bis zu 15 Gew. % sonstige verarbeitungsbedingte Hilfsstoffe aus der Gruppe Acrylate, Polymethylmethacrylate, Leinöl, Härtungsbeschleuniger, Treibmittel und Kicker aus der Gruppe Polyole, Harnstoff, Zink-, Blei oder Kadmiumverbindungen, vorhanden sind.

17. Flächengebilde nach einem der vorhergehenden Ansprüche 1 bis 6, 13, 14 und 16, dadurch gekennzeichnet, daß in der Beschichtungsmasse für die chemisch geschäumte Schaumschicht (V) bis zu 25 Gew. %, bezogen auf epoxidiertes Öl und Halbester, an Treibmittel enthalten sind.

18. Flächengebilde nach Anspruch 17, dadurch gekennzeichnet, daß in der Beschichtungsmasse für die chemisch geschäumte Schaumschicht (V) bis zu 15 Gew. %, bezogen auf epoxidiertes Öl und Halbester, an Treibmittel enthalten sind.

19. Flächengebilde nach einem der vorhergehenden Ansprüche 1 bis 18, dadurch gekennzeichnet, daß in der Beschichtungsmasse für den Deckstrich Sikkative in einer Menge von 10⁻¹ % Metallgehalt, bezogen auf epoxidiertes Öl und Halbester, vorhanden sind.

20. Flächengebilde nach Anspruch 19, dadurch gekennzeichnet, daß es Verbindungen der Metalle Al, Li, Ca, Fe, Mg, Mn, Pb, Zn, Zr, Ce, Co einzeln oder in Abmischungen davon enthält.

21. Flächengebilde nach einem der vorhergehenden Ansprüche 1 bis 19, dadurch gekennzeichnet, daß als Füllstoffe mineralische Füllstoffe aus der Gruppe Kreide, Bariumsulfat, Kieselsäure, Kaolin, Talkum oder Holzmehl, Korkmehl, Glas, Textil- oder Glasfasern oder Pflanzenfasern in den Beschichtungsmassem enthalten sind oder eingearbeitet werden.

22. Flächengebilde nach einem der Ansprüche 1 oder 8, dadurch gekennzeichnet, daß als Hydrophobierungsmittel Polyethylenwachs, Fischer Tropsch Hartparaffin, tierische Wachse, pflanzliche Wachse oder Mineralwachse vorliegen.

23. Flächengebilde gemäß einem der vorhergehenden Ansprüche 1 bis 22, dadurch gekennzeichnet, daß es ein Bodenbelag oder eine Fliese ist.

## Claims

1. A planar structure composed of at least one customary carrier layer (I) and at least one transparent cover coat (II), an optional back coat (III) arranged under the carrier layer (I) and made from a chemically or mechanically foamed foam layer, and an optional priming coat (IV) arranged between carrier layer (I) and cover coat (II) and/or between carrier layer (I) and back coat (III), wherein the coating compositions for the layers (II), (III), (IV) are obtainable from a combination of:
a) epoxidized products of esters of unsaturated fatty acids having a chain length C₈ through C₂₂ with multi valent aliphatic alcohols containing 2 through 6 carbon atoms and which contain more than one epoxy group per molecule on average; and
b) partial esters of polycarboxylic acids with polyetherpolyols that contain at least one free carboxylic acid group per molecule and a double bond;
c) optionally, a hydrophobing agent; and
d) optionally, further additives from the group consisting of fillers, pigments, expanding agents and auxiliary substances,
wherein
the components (a) and (b) are employed in the cover coat (II) in the weight ratio of 0.33:1 to 1.45:1,
the components (a) and (b) are employed in the priming coat (IV) in the weight ratio of 0.92:1 to 3.15:1, and
the components (a) and (b) are employed in the back coat (III) in the weight ratio of 0.75:1 to 2.375:1 and wherein siccatives in an amount of 2 x 10⁻¹ to 10⁻²% metal content, based on epoxidized oil and partial ester are present in the coating composition for the cover coat (II).

2. Planar structure according to Claim 1, characterized in that a chemically foamed layer (V) is arranged under the cover coat (II).

3. Planar structure according to Claims 1 and 2, characterized in that a protective layer (VI) of unsaturated, hardenable lacquer systems is arranged above the cover coat (II), wherein the polymers or copolymers for the lacquer systems are selected from the group of polyacrylates, polymethacrylates, polyurethanes and mixtures thereof.

4. Planar structure according to Claim 1, characterized in that the polycarboxylic acid of component (b) comprises 2 to 10 carbon atoms.

5. Planar structure according to Claim 4, characterized in that the polycarboxylic acid is a dicarboxylic acid.

6. Planar structure according to any one of the preceding Claims 1 to 5, characterized in that the dicarboxylic acid is selected from the group consisting of itaconic acid, maleic acid, fumaric acid, the anhydrides thereof and mixtures thereof.

7. Planar structure according to any one of the preceding Claims 1 to 6, characterized in that 10 to 57 weight percent hydrophobing agent are contained in the composition for the cover coat (II), based on the mixture of epoxidized oil and partial ester.

8. Planar structure according to Claim 7, characterized in that 12 to 34 weight percent hydrophobing agent are contained in the composition for the cover coat (II), based on the mixture of epoxidized oil and partial ester.

9. Planar structure according to any one of the preceding Claims 1 to 8, characterized in that no more than 8 weight percent filler are contained in the coating compositions for the cover coat (II).

10. Planar structure according to any one of the preceding Claims 1 through 8, characterized in that no more than 2 weight percent filler are contained in the coating compositions for the cover coat (II).

11. Planar structure according to any one of the preceding Claims 1 to 6, characterized in that 13 to 74 weight percent filler are contained in the coating composition for the compact or priming coat (IV), based on epoxidized oil and partial ester.

12. Planar structure according to Claim 11, characterized in that 20 to 50 weight percent filler are contained in the coating composition for the compact or priming coat (IV), based on epoxidized oil and partial ester.

13. Planar structure according to any one of the preceding Claims 1 to 6, characterized in that 39 to 100 weight percent filler are present in the coating composition for the chemically foamed foam layer (V), based on epoxidized oil and partial ester.

14. Planar structure according to Claim 13, characterized in that 60 to 100 weight percent filler are contained in the coating composition for the chemically foamed foam layer (V).

15. Planar structure according to any one of the preceding Claims 1 to 6, characterized in that up to 10 weight percent filler are present in the coating composition for the mechanically foamed foam layer, based on epoxidized oil and partial ester.

16. Planar structure according to any one of the preceding Claims 1 to 15, characterized in that other processing-conditioned auxiliaries from the group of acrylates, polymethylmethacrylates, linseed oil, curing accelerators, foaming agents and kickers from the group of polyols, urea, zinc, lead or cadmium compounds are present in the coating compositions in quantities up to 15 weight percent.

17. Planar structure according to any one of the preceding Claims 1 to 6, 13, 14 and 16, characterized in that up to 25 weight percent, based on epoxidized oil and partial ester, of expanding agent are contained in the coating composition for chemically foamed foam layer (V).

18. Planar structure according to Claim 17, characterized in that up to 15 weight percent, based on epoxidized oil and partial ester, of expanding agent are contained in the coating composition for the chemically foamed foam layer (V).

19. Planar structure according to any one of the preceding Claims 1 to 18, characterized in that siccatives in an amount of 10⁻¹% metal content, based on epoxidized oil and partial ester are present in the coating composition for the cover coat.

20. Planar structure according to Claim 19, characterized in that said planar structure contains compounds of the metals Al, Li, Ca, Fe, Mg, Mn, Pb, Zn, Zr, Ce, Co individually or in blends thereof.

21. Planar structure according to any one of the preceding Claims 1 to 19, characterized in that mineral fillers from the group of chalk, barium sulfate, silicic acid, kaolin, talcum or saw dust, cork dust, glass, textile or glass fibers or plant fibers are contained in the coating compositions or are worked into the coating compositions as fillers.

22. Planar structure according to any one of the preceding Claims 1 or 8, characterized in that polyethylene wax, Fischer-Tropsch hard paraffine, animal waxes, plant waxes or mineral waxes are present as hydrophobing agent.

23. Planar structure according to any one of the preceding Claims 1 to 22, characterized in that said structure is a floor covering or a tile.

## Revendications

1. Structure plane comprenant au moins un couche de support (I) usuelle et au moins une couche de recouvrement (II) transparente, le cas échéant une couche arrière (III) formée d'une couche de mousse expansée chimiquement ou mécaniquement et disposée au-dessous de la couche de support (I), le cas échéant une couche de fond (IV) qui est disposée entre la couche de support (I) et la couche de recouvrement (II) et/ou entre la couche de support (I) et la couche arrière (III), les masses de revêtement pour les couches (II), (III) et (IV) pouvant être préparées à partir d'une combinaison
(a) de produits d'époxydation d'esters d'acides gras insaturés ayant une longueur de chaîne de C8 à C22 avec des polyols aliphatiques contenant de 2 à 6 atomes de carbone, qui contiennent en moyenne plus d'un groupe époxy par molécule, et
(b) d'esters partiels d'acides polycarboxyliques et de polyéthers-polyols qui contiennent au moins un groupe acide carboxylique libre par molécule et une double liaison,
(c) le cas échéant d'un agent conférant des propriétés hydrophobes, et
(d) le cas échéant d'additifs supplémentaires choisis dans l'ensemble constitué par des charges, des pigments, des agents moussants et des adjuvants,
dans laquelle, pour la couche de recouvrement (II), on utilise les composants (a) et (b) selon un rapport en poids de 0,33 : 1 à 1,45 : 1,
pour la couche de fond (IV), on utilise les composants (a) et (b) selon un rapport en poids de 0,92 : 1 à 3,15 : 1, et pour la couche arrière (III), on utilise les composants (a) et (b) selon un rapport en poids de 0,75 : 1 à 2,375 : 1,
et dans la masse de revêtement pour la couche de recouvrement (II), des siccatifs sont présents en une quantité de 2 x 10⁻¹ à 10⁻² % en teneur en métal par rapport à l'huile époxydée et aux hémi-esters.

2. Structure plane selon la revendication 1, caractérisée en ce qu'une couche (V) expansée chimiquement est disposée au-dessous de la couche de recouvrement (II).

3. Structure plane selon les revendications 1 et 2, caractérisée en ce qu'une couche de protection (VI) formée de systèmes de vernis insaturés durcissables est disposée au-dessus de la couche de recouvrement (II), les polymères ou copolymères pour les systèmes de vernis étant choisis dans l'ensemble constitué par des polyacrylates, des polyméthacrylates, des polyuréthannes et des mélanges de ceux-ci.

4. Structure plane selon la revendication 1, caractérisée en ce que l'acide polycarboxylique du composant (b) comporte de 2 à 10 atomes de carbone.

5. Structure plane selon la revendication 4, caractérisée en ce que l'acide polycarboxylique est un acide dicarboxylique.

6. Structure plane selon l'une des revendications 1 à 5 précédentes, caractérisée en ce qu'on choisit l'acide dicarboxylique dans l'ensemble constitué par l'acide itaconique, l'acide maléique, l'acide fumarique, leurs anhydrides ou des mélanges de ceux-ci.

7. Structure plane selon l'une des revendications 1 à 6 précédentes, caractérisée en ce que la masse pour la couche de recouvrement (II) contient de 10 à 57 % en poids d'agent conférant des propriétés hydrophobes par rapport au mélange d'huile époxydée et de hémi-esters.

8. Structure plane selon la revendication 7, caractérisée en ce que la masse pour la couche de recouvrement (II) contient de 12 à 34 % en poids d'agent conférant des propriétés hydrophobes par rapport au mélange d'huile époxydée et de hémi-esters.

9. Structure plane selon l'une des revendications 1 à 8 précédentes, caractérisée en ce que les masses de revêtement pour la couche de recouvrement (II) ne contiennent pas plus de 8 % en poids de charge.

10. Structure plane selon l'une des revendications 1 à 8 précédentes, caractérisée en ce que les masses de revêtement pour la couche de recouvrement (II) ne contiennent pas plus de 2 % en poids de charge.

11. Structure plane selon l'une des revendications 1 à 6 précédentes, caractérisée en ce que la masse de revêtement pour la couche compacte ou couche de fond (IV) contient de 13 à 74 % en poids de charge par rapport à l'huile époxydée et aux hémi-esters.

12. Structure plane selon la revendication 11, caractérisée en ce que la masse de revêtement pour la couche compacte ou couche de fond (IV) contient de 20 à 50 % en poids de charge par rapport à l'huile époxydée et aux hémi-esters.

13. Structure plane selon l'une des revendications 1 à 6 précédentes, caractérisée en ce que la masse de revêtement pour la couche de mousse (V) expansée chimiquement contient de 39 à 100 % en poids de charge par rapport à l'huile époxydée et aux hémi-esters.

14. Structure plane selon la revendication 13, caractérisée en ce que la masse de revêtement pour la couche de mousse (V) expansée chimiquement contient de 60 à 100 % en poids de charge.

15. Structure plane selon l'une des revendications 1 à 6 précédentes, caractérisée en ce que la masse de revêtement pour la couche de mousse expansée mécaniquement contient jusqu'à 10 % en poids de charge par rapport à l'huile époxydée et aux hémi-esters.

16. Structure plane selon l'une quelconque des revendications 1 à 15 précédentes, caractérisée en ce que les masses de revêtement contiennent jusqu'à 15 % en poids d'autres adjuvants liés au traitement, choisis dans l'ensemble constitué par des acrylates, des polyméthacrylates de méthyle, l'huile de lin, des accélérateurs de durcissement, des agents moussants et des déclencheurs choisis dans l'ensemble constitué par des polyols, l'urée et des composés du zinc, du plomb ou du cadmium.

17. Structure plane selon l'une des revendications 1 à 6, 13, 14 et 16 précédentes, caractérisée en ce que la masse de revêtement pour la couche de mousse (V) expansée chimiquement contient jusqu'à 25 % en poids d'agent moussant par rapport à l'huile époxydée et aux hémi-esters.

18. Structure plane selon la revendication 17, caractérisée en ce que la masse de revêtement pour la couche de mousse (V) expansée chimiquement contient jusqu'à 15 % en poids d'agent moussant par rapport à l'huile époxydée et aux hémi-esters.

19. Structure plane selon l'une des revendications 1 à 18 précédentes, caractérisée en ce que la masse de revêtement pour la couche de recouvrement contient des siccatifs en une quantité de 10⁻¹ % en teneur de métal par rapport à l'huile époxydée et aux hémi-esters.

20. Structure plane selon la revendication 19, caractérisée en ce qu'elle contient des composés des métaux Al, Li, Ca, Fe, Mg, Mn, Pb, Zn, Zr, Ce et Co, individuellement ou sous la forme de mélanges de ceux-ci.

21. Structure plane selon l'une des revendications 1 à 19 précédentes, caractérisée en ce que, en tant que charges, des charges minérales choisies dans l'ensemble constitué par la craie, le sulfate de baryum, l'acide silicique, le kaolin, le talc ou la farine de bois, la farine de liège, le verre, des fibres textiles ou des fibres de verre ou des fibres végétales sont contenues ou incorporées dans les masses de revêtement.

22. Structure plane selon l'une des revendications 1 et 8, caractérisée en ce que de la cire de polyéthylène, de la paraffine dure de Fischer-Tropsch, des cires animales, des cires végétales ou des cires minérales sont présentes en tant qu'agent conférant des propriétés hydrophobes.

23. Structure plane selon l'une des revendications 1 à 22 précédentes, caractérisée en ce qu'il s'agit d'un revêtement de sol ou d'un carreau.
